(19) Europäisches Patentamt / European Patent Office / Office européen des brevets

(11) **EP 4 550 719 A1**

(12) **EUROPEAN PATENT APPLICATION**

(43) Date of publication:
07.05.2025  Bulletin 2025/19

(21) Application number: 23220466.9

(22) Date of filing: 28.12.2023

(51) International Patent Classification (IPC):
*H04L 9/32* (2006.01)

(52) Cooperative Patent Classification (CPC):
H04L 9/3218

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 31.10.2023  KR 20230148089

(71) Applicant: **IUCF-HYU (INDUSTRY-UNIVERSITY COOPERATION FOUNDATION HANYANG UNIVERSITY)**
Seoul 04763 (KR)

(72) Inventors:
• OH, Hyun Ok
  04763 Seoul (KR)
• OH, Dong Hwan
  04763 Seoul (KR)

(74) Representative: **Prüfer & Partner mbB Patentanwälte · Rechtsanwälte Sohnckestraße 12 81479 München (DE)**

(54) **HADAMARD PRODUCT ARGUMENT METHOD AND APPARATUS**

(57)     Provided are a device and method for proving a Hadamard product without any trusted setup. The method includes receiving a random value from a verifier, generating a random vector using the random value, generating a proof value for a Hadamard product of a first target vector and a second target vector using the random vector and an inner product argument (IPA), and transmitting the proof value to the verifier.

FIG. 1

EP 4 550 719 A1

**Description**

CROSS-REFERENCE TO RELATED APPLICATION

This application claims priority to and the benefit of Korean Patent Application No. 2023-0148089, filed on October 31, 2023, the disclosure of which is incorporated herein by reference in its entirety.

BACKGROUND

**1. Field of the Invention**

The present disclosure relates to a device and method for proving a Hadamard product, and more particularly, to a device and method for proving a Hadamard product without any trusted setup.

**2. Discussion of Related Art**

A Hadamard product is an operation of multiplying elements of two vectors with the same length. A vector with the same length as an input vector is output as the calculation result of a Hadamard product. Hadamard product operations are used in zero-knowledge succinct non-interactive arguments of knowledge (zk-SNARKs), and an efficient zero-knowledge proof protocol can be developed by succinctly proving a Hadamard product operation.

A Hadamard product argument involves proving that the calculation result of the Hadamard product of two given vectors holds true. According to the paper "Linear algebra with sub-linear zero-knowledge arguments Groth, Jens, Annual International Cryptology Conference. Berlin, Heidelberg: Springer Berlin Heidelberg, 2009" and the like, it is known that a Hadamard product can be proved through an inner product argument (IPA). An IPA is a method of proving that the calculation result of the inner product of two committed vectors holds true without revealing the two committed vectors. In other words, a Hadamard product argument using an IPA may be performed by converting the Hadamard product into an inner product operation, performing the inner product operation, and then determining whether the calculation result of the inner product holds true through an IPA.

Among such IPA methods, an IPA method that is known to be the most efficient and have no trusted setup is a method proposed in the paper "Dory: Efficient, transparent arguments for generalized inner products and polynomial commitments, Lee, Jonathan. In: Theory of Cryptography Conference. Springer, Cham, 2021." However, in the case of proving a Hadamard product of two given vectors through an IPA, a random value used in the proving process is included in the calculation result of the inner product of the vectors. Here, the foregoing IPA method (Dory) that is the most efficient involves a verifier verifying a prover's manipulation on a commitment key and thus cannot be used in Hadamard product arguments.

Consequently, a method is necessary to prove a Hadamard product using the foregoing most efficient IPA method (Dory) without any trusted setup

SUMMARY OF THE INVENTION

The present disclosure is directed to providing a device and method for proving a Hadamard product that may be efficiently used without any trusted setup and reduce a verification time of a verifier.

According to an aspect of the present disclosure, there is provided a method of proving a Hadamard product, the method including: receiving a random value from a verifier; generating a random vector using the random value; generating a proof value for a Hadamard product of a first target vector and a second target vector using the random vector and an inner product argument (IPA); and transmitting the proof value to the verifier.

According to another aspect of the present disclosure, there is provided a method of proving a Hadamard product, the method including: receiving a random value from a verifier; generating a random vector using the random value; generating a proof value for a Hadamard product of a first target vector and a second target vector using the random vector and an IPA by eliminating the random value in a calculation process of the IPA; and transmitting the proof value to the verifier.

According to still another aspect of the present disclosure, there is provided a device for proving a Hadamard product, the device including: a communication module configured to receive a random value from a verifier and transmit a proof value to the verifier; a memory; and at least one processor electrically connected to the memory. The processor generates a random vector using the random value and generates the proof value for a Hadamard product of a first target vector and a second target vector using the random vector and an IPA.

BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:

FIG. 1 is a sequence diagram illustrating a method of proving a Hadamard product between a prover and a verifier according to an exemplary embodiment of the present disclosure;
FIG. 2 is a flowchart illustrating a method of proving a Hadamard product according to an exemplary embodiment of the present disclosure; and
FIG. 3 is a block diagram illustrating a device for proving a Hadamard product according to an exemplary embodiment of the present disclosure.

DETAILED DESCRIPTION OF EXEMPLARY EMBODIMENTS

Since the present disclosure can be variously modified and have several embodiments, specific embodiments will be illustrated in the drawings and described in detail below. However, the embodiments are not intended to limit the present disclosure to specific forms of implementation, and it should be understood that the present disclosure includes all modifications, equivalents, and substitutions within the spirit and technical scope of the present disclosure. Throughout the drawings, like reference numerals refer to like components.

As described above, in a Hadamard product argument using an inner product argument (IPA), a random value is included in the calculation result of the inner product of vectors. Accordingly, the most efficient IPA method (Dory) cannot be used in Hadamard product arguments.

Therefore, the present disclosure proposes a Hadamard product proving method of performing an inner product operation of vectors by eliminating a random value from the inner product of the vectors so that the most efficient IPA method (Dory) can be used in Hadamard product arguments. According to an exemplary embodiment of the present disclosure, a random value is eliminated from the calculation result of an inner product using a random elimination folding technique which is used in IPAs.

According to an exemplary embodiment of the present disclosure, it is possible to prove a Hadamard product without any trusted setup and reduce a verifier's verification costs. Therefore, the present disclosure can be efficiently used in a constraint system, such as rank-1 constraint satisfaction (R1CS), which is used in zero-knowledge succinct non-interactive arguments of knowledge (zk-SNARKs).

A method of proving a Hadamard product according to an exemplary embodiment of the present disclosure can be performed in a computing device including a communication module, a memory, and at least one processor electrically connected to the memory.

Hereinafter, exemplary embodiments of the present disclosure will be described in detail with reference to the accompanying drawings.

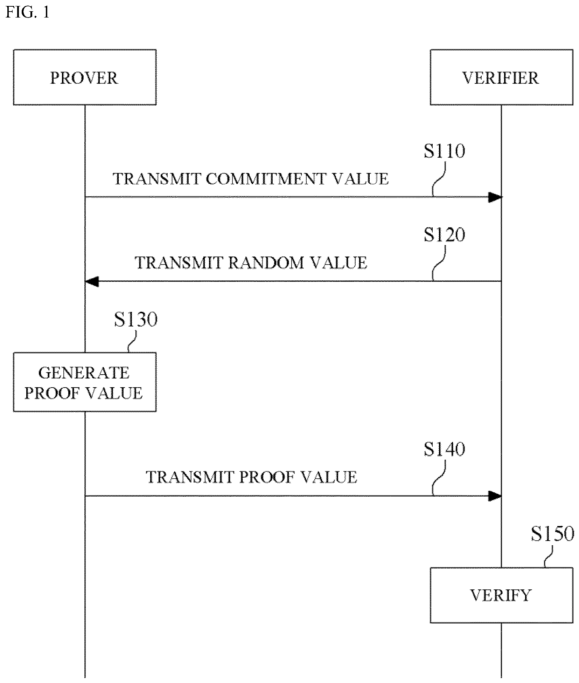

FIG. 1 is a sequence diagram illustrating a method of proving a Hadamard product between a prover and a verifier according to an exemplary embodiment of the present disclosure.

Referring to FIG. 1, a prover transmits a commitment value for first and second target vectors of which the Hadamard product will be calculated to a verifier (S110). To prevent the verifier from manipulating the first and second target vectors, the commitment value is transmitted to the verifier.

Then, the verifier generates a random value and transmits the random value to the prover (S120).

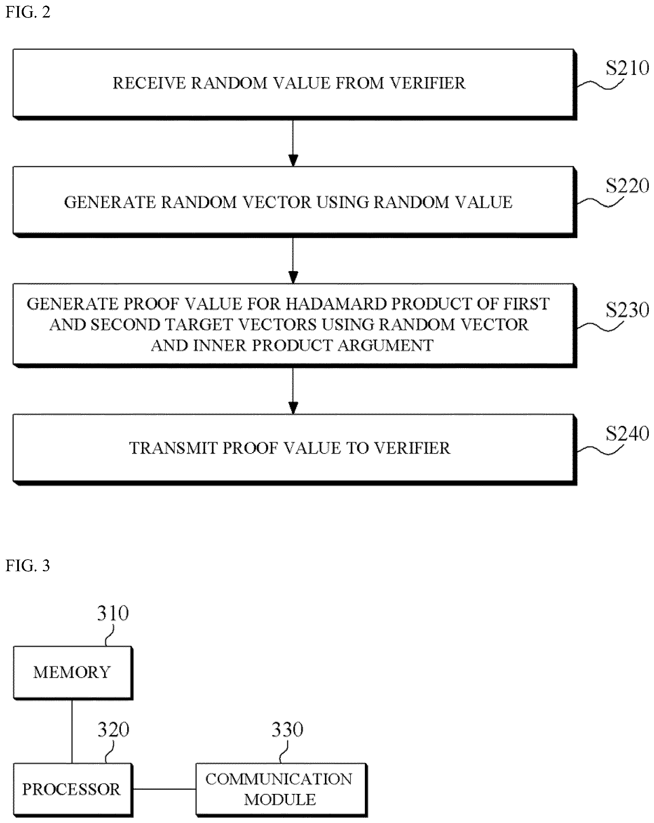

The prover generates a proof value for a Hadamard product argument using the random value (S130). In other words, the proof value is a value for the verifier to verify that the calculation result of a Hadamard product of the first and second target vectors holds true. A method of generating the proof value will be described in detail below with reference to FIG. 2.

The prover transmits the generated proof value to the verifier (S140), and the verifier verifies whether the calculation result of the Hadamard product of the first and second target vectors holds true using the proof value (S150).

FIG. 2 is a flowchart illustrating a method of proving a Hadamard product according to an exemplary embodiment of the present disclosure. In FIG. 2, a method of proving a Hadamard product which is performed in a prover's computing device will be described as an exemplary embodiment.

Referring to FIG. 2, a computing device according to an exemplary embodiment of the present disclosure receives a random value from a verifier (S210) and generates a random vector using the random value (S220). As described above, before receiving the random value, the computing device may transmit a commitment value for first and second target vectors to the verifier.

The computing device generates a random vector which is represented as shown in Expression 1, and the random vector has the same length as the first and second target vectors.

[Expression 1]

$$[\gamma^0, \gamma^1, \ldots, \gamma^{m-1}]$$

Here, $\gamma$ is the random value, m is the length of the first and second target vectors, and the length of a vector corresponds to the number of elements of the vector.

The computing device generates a proof value for the Hadamard product of the first and second target vectors using the random vector and an IPA (S230) and transmits the generated proof value to the verifier (S240). In the calculation process of the IPA, the computing device may eliminate the random value to generate the proof value for the Hadamard product of the first and second target vectors and may use the random elimination folding technique to eliminate the random value.

According to an exemplary embodiment, the computing device may generate vectors $w_1$ and $w_2$ using Expression 2 and generate a proof value which represents whether Expressions 2 and 3 are satisfied. Here, the computing device also transmits a commitment value for the vectors $w_1$ and $w_2$ to the verifier so that a prover can be prevented from manipulating the vectors $w_1$ and $w_2$.

[Expression 2]

$$w_1 = r \circ v_1$$
$$w_2 = r \circ u$$

[Expression 3]

$$<w_1, v_2> = <w_2, 1>$$

Here, $\circ$ is a Hadamard product, <> is an inner product operation, r is the random vector, $v_1$ is the first target vector, and u is the calculation value of the Hadamard product of the first target vector and the second target vector.

To eliminate the random value and generate a proof value, the computing device may generate a proof value for Expression 2 using Expression 4. Here, $v_2$ is the second target vector.

[Expression 4]

$$<w_1, v_2> = <v_1, v_2>$$
$$<u, 1> = <w_2, 1>$$

In Expression 4, $<w_1, v_2> = <v_1, v_2>$ is an equation for generating a proof value for $w_1 = r \circ v_1$ in Expression 2, and $<u, 1> = <w_2, 1>$ is an equation for generating a proof value for $w_2 = r \circ u$ in Expression 2.

The computing device generates a scalar value for each of the left side and the right side of Expressions 3 and 4 as a proof value using the random elimination folding technique. In other words, the computing device does not calculate the inner products of Expressions 3 and 4 including a random value but rather calculates a scalar value for each of the left sides and the right sides of Expressions 3 and 4 as a proof value with a random value eliminated using the random elimination folding technique. The computing device may calculate scalar values by applying the random elimination folding technique to the inner product operations $<w_1, v_2>$, $<w_2, 1>$, $<w_1, v_2>$, and $<w_2, 1>$ including a random value.

When the random value is eliminated, inner products of the left side and the right side of Expressions 3 and 4 may become identical. Accordingly, the verifier can determine whether the calculation value of the Hadamard product of the first and second target vectors holds true by verifying whether scalar values of the left and right sides of Expressions 3 and 4 are identical.

The random elimination folding technique is a technique for reducing the length of a vector by dividing elements of the vector including a random value into two groups in an order in which the elements are listed and then adding the divided vector elements. Here, elements of the vector including the random value with higher orders among the elements of the vector are multiplied by an inverse value of the random value so that elements at the same position in the two groups included in the vector have the same order.

For example, when the vector $w_1$ corresponds to Expression 5, the computing device divides the vector $w_1$ into $a_0$, $a_1\gamma$, $a_2\gamma^2$, $a_3\gamma^3$ and $a_4\gamma^4$, $a_5\gamma^5$, $a_6\gamma^6$, $a_7\gamma^7$ and then multiplies $a_4\gamma^4$, $a_5\gamma^5$, $a_6\gamma^6$, $a_7\gamma^7$ by $\gamma^{-4}$.

[Expression 5]

$$[a_0, a_1\gamma, a_2\gamma^2, a_3\gamma^3, a_4\gamma^4, a_5\gamma^5, a_6\gamma^6, a_7\gamma^7]$$

After that, the computing device adds the divided vector elements so that the vector $w_1$ can be reduced in length as shown in Expression 6.

[Expression 6]

$$[a_0 + a_4, a_1\gamma^1 + a_5\gamma^1, a_2\gamma^2 + a_6\gamma^2, a_3\gamma^3 + a_7\gamma^3]$$

In this way, when the random elimination folding technique is applied to the vector 1 until the length of the vector $w_1$ becomes 1, the vector $w_1$ includes one element which does not include the random value. Accordingly, the inner product values of Expressions 3 and 4 do not include the random value.

According to an exemplary embodiment of the present disclosure, it is possible to apply the most efficient IPA method (Dory) to a Hadamard product argument by eliminating a random value from the calculation result of the inner product of vectors. Therefore, it is possible to prove the Hadamard product without any trusted setup and maintain a verifier's verification costs at 0 (log m).

FIG. 3 is a block diagram illustrating a device for proving a Hadamard product according to an exemplary embodiment of the present disclosure.

Referring to FIG. 3, a device for proving a Hadamard product according to the exemplary embodiment of the present disclosure includes a memory 310, at least one processor 320, and a communication module 330.

The processor 320 electrically connected to the memory 310 performs the above-described process of proving a Hadamard product. The processor 320 generates a random vector using a random value and generates a proof value for the Hadamard product of first and second target vectors using the random vector and an IPA. In the calculation process of the IPA, the random value may be eliminated to generate the proof value for the Hadamard product.

The communication module 330 receives the random value from a verifier and transmits the proof value for the Hadamard product of the first and second target vectors to the verifier.

According to an exemplary embodiment of the present disclosure, it is possible to prove a Hadamard product without any trusted setup and reduce a verifier's verification costs. Therefore, the present disclosure can be efficiently used in a constraint system, such as R1CS, which is used in zk-SNARKs.

The above-described technical details may be implemented in the form of program commands that can be executed by various computing devices and recorded on a computer-readable medium. The computer-readable medium may include program commands, data files, data structures, and the like solely or in combination. The program commands recorded on the medium may be specially designed and constructed for embodiments or may be known and available to those of ordinary skill in the art of computer software. Examples of the computer-readable medium include magnetic media, such as a hard disk, a floppy disk, and magnetic tape, optical media, such as a compact disc (CD)-read only memory (ROM) and a digital versatile disc (DVD), magneto-optical media, such as a floptical disk, and hardware devices specially configured to store and execute program commands such as a ROM, a random-access memory (RAM), a flash memory, and the like. Examples of the program commands include not only a machine language code generated by a compiler but also a high-level language code which is executable by a computer using an interpreter and the like. A hardware device may be configured to operate as one or more software modules to perform operations of embodiments, and vice versa.

Although the present disclosure has been described with reference to particular matters, such as detailed components, limited embodiments, and drawings, these are merely provided to help overall understanding of the present disclosure, and the present disclosure is not limited to the embodiments. Those of ordinary skill in the art can make various alterations and modifications from the embodiments. Therefore, the spirit of the present disclosure should not be limited to the described embodiments, and it should be construed that the following claims and all equivalents or equivalent modifications of the claims fall within the scope of the present disclosure.

**Claims**

1. A method of proving a Hadamard product, comprising:

   receiving a random value from a verifier;
   generating a random vector using the random value;
   generating a proof value for a Hadamard product of a first target vector and a second target vector using the random vector and an inner product argument (IPA); and
   transmitting the proof value to the verifier.

2. The method of claim 1, wherein the random vector is expressed as Expression 1 below:

   [Expression 1]

   $$[\gamma^0, \gamma^1, ..., \gamma^{m-1}] ,$$

   where $\gamma$ is the random value, and m is a length of the first and second target vectors.

3. The method of claim 1 or 2, wherein the generating of the proof value comprises:

   generating a vector $w_1$ and a vector $w_2$ using Expression 2 below; and
   generating proof values representing whether Expressions 2 and 3 are satisfied:

   [Expression 2]

   $$w_1 = r \circ v_1$$
   $$w_2 = r \circ u ;$$

   and

   [Expression 3]

   $$< w_1, v_2 > = < w_2, 1 > ,$$

   where r is the random vector, $v_1$ is the first target vector, and u is a calculation value of the Hadamard product of the first and second target vectors.

4. The method of claim 3, wherein the generating of the proof values comprises generating proof values for Expression 2 using Expression 4 below,
   wherein scalar values of left sides and right sides of Expressions 3 and 4 are generated as the proof values using a random elimination folding technique:

[Expression 4]

$$\langle w_1, v_2 \rangle = \langle v_1, v_2 \rangle$$
$$\langle u, 1 \rangle = \langle w_2, 1 \rangle \quad,$$

where $v_2$ is the second target vector.

5. The method of claim 4, wherein the scalar values are values from which the random value is eliminated.

6. The method of claim 4 or 5, wherein the verifier verifies whether the scalar values of the left sides and the right sides of Expressions 3 and 4 are identical.

7. The method of one of claims 3 to 6, further comprising transmitting the first and
second target vectors and a commitment value for the vector $w_1$ and the vector $w_2$ to the verifier.

8. A method of proving a Hadamard product, comprising:

   receiving a random value from a verifier;
   generating a random vector using the random value;
   generating a proof value for a Hadamard product of a first target vector and a second target vector using the random vector and an inner product argument (IPA) by eliminating the random value in a calculation process of the IPA; and
   transmitting the proof value to the verifier.

9. A device for proving a Hadamard product, comprising:

   a communication module configured to receive a random value from a verifier and transmit a proof value to the verifier;
   a memory; and
   at least one processor electrically connected to the memory,
   wherein the processor generates a random vector using the random value and generates the proof value for a Hadamard product of a first target vector and a second target vector using the random vector and an inner product argument (IPA).

10. The device of claim 9, wherein the processor eliminates the random value to generate the proof value in a calculation process of the IPA.

FIG. 1

FIG. 2

RECEIVE RANDOM VALUE FROM VERIFIER — S210

GENERATE RANDOM VECTOR USING RANDOM VALUE — S220

GENERATE PROOF VALUE FOR HADAMARD PRODUCT OF FIRST AND SECOND TARGET VECTORS USING RANDOM VECTOR AND INNER PRODUCT ARGUMENT — S230

TRANSMIT PROOF VALUE TO VERIFIER — S240

FIG. 3

310

MEMORY

320

PROCESSOR

330

COMMUNICATION MODULE

Europäisches
Patentamt

European
Patent Office

Office européen
des brevets

# EUROPEAN SEARCH REPORT

Application Number

EP 23 22 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEEWON CHUNG ET AL: "Bulletproofs+: Shorter Proofs for Privacy-Enhanced Distributed Ledger", IACR, INTERNATIONAL ASSOCIATION FOR CRYPTOLOGIC RESEARCH , vol. 20200618:154806 17 June 2020 (2020-06-17), pages 1-40, XP061035991, Retrieved from the Internet: URL:http://eprint.iacr.org/2020/735.pdf [retrieved on 2020-06-17] * sections 1.1, 3 * | 1-10 | INV. H04L9/32 |
| X,D | LEE JONATHAN: "Dory: Efficient, Transparent Arguments for Generalised Inner Products and Polynomial Commitments", 26 November 2021 (2021-11-26), SPRINGER INTERNATIONAL PUBLISHING, PAGE(S) 1 - 34, XP047615738, * section 1.2 * | 1-10 | |
| | | | TECHNICAL FIELDS SEARCHED (IPC) |
| X | BENEDIKT BNZ ET AL: "Proof-Carrying Data without Succinct Arguments", IACR, INTERNATIONAL ASSOCIATION FOR CRYPTOLOGIC RESEARCH , vol. 20210402:225000 2 April 2021 (2021-04-02), pages 1-70, XP061052620, Retrieved from the Internet: URL:https://eprint.iacr.org/2020/1618.pdf [retrieved on 2021-04-02] * section 2.3.3 * | 1-10 | H04L |

-/--

The present search report has been drawn up for all claims

| Place of search | Date of completion of the search | Examiner |
|---|---|---|
| Munich | 6 June 2024 | Billet, Olivier |

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 22 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JONATHAN BOOTLE ET AL: "Gemini: Elastic SNARKs for Diverse Environments", IACR, INTERNATIONAL ASSOCIATION FOR CRYPTOLOGIC RESEARCH , vol. 20220406:125953 6 April 2022 (2022-04-06), pages 1-56, XP061070998, Retrieved from the Internet: URL:https://eprint.iacr.org/2022/420.pdf [retrieved on 2022-04-14] * section 2.4; page 17 * | 1-10 | |

-----

**TECHNICAL FIELDS
SEARCHED        (IPC)**

The present search report has been drawn up for all claims

| Place of search | Date of completion of the search | Examiner |
|---|---|---|
| Munich | 6 June 2024 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230148089

**Non-patent literature cited in the description**

- Linear algebra with sub-linear zero-knowledge arguments. **GROTH** ; **JENS**. Annual International Cryptology Conference. Springer Berlin Heidelberg, 2009

- Dory: Efficient, transparent arguments for generalized inner products and polynomial commitments. **LEE** ; **JONATHAN**. Theory of Cryptography Conference. Springer, 2021